# EUROPÄISCHE PATENTSCHRIFT

(11) **EP 2 231 418 B1**
(45) Veröffentlichungstag und Bekanntmachung des Hinweises auf die Patenterteilung: **08.08.2012**
(21) Anmeldenummer: 08869802.2
(22) Anmeldetag: 19.12.2008
(51) Int. Cl.: B60B 17/00, F16D 65/12

(54) **SCHIENENRAD**
RAIL WHEEL
ROUE POUR RAIL

(30) Priorität: 11.01.2008 DE 102008003923
(43) Veröffentlichungstag der Anmeldung: 29.09.2010
(73) Patentinhaber: KNORR-BREMSE Systeme für Schienenfahrzeuge GmbH, 80809 München (DE)
(72) Erfinder: WIRTH, Xaver, 85737 Ismaning (DE); MOSBACH, Christian, 82239 Alling (DE)
(74) Vertreter: Mattusch, Gundula
(86) Internationale Anmeldenummer: PCT/EP2008/010931
(87) Internationale Veröffentlichungsnummer: WO 2009/086900

(56) Entgegenhaltungen:
- EP-A- 0 360 435
- EP-A- 0 429 211
- EP-A- 0 809 037
- DE-U1- 29 604 157
- FR-A- 2 698 425
- GB-A- 2 390 885

## Beschreibung

Die Erfindung betrifft ein Schienenrad nach dem Oberbegriff des Anspruchs 1.

Bei den bekannten Schienenrädern sind die beidseitig an dem Radkörper angeschlossenen Radbremsscheiben durch eine Vielzahl von über den Umfang verteilten Befestigungselementen, vornehmlich Durchgangsschrauben, am Radkörper befestigt.

Dabei liegen die Radbremsscheiben mit angeformten Kühlrippen, Zentrier- und Befestigungs-Augen unmittelbar am Radkörper an und zwar an einem umfänglichen Radsteg, der eine Radnabe mit einem äußeren Laufring verbindet.

Durch die unmittelbare Anlage der Radbremsscheiben am Radkörper ergeben sich jedoch betriebsbedingt erhebliche Probleme.

So entstehen während einer Bremsung infolge des auftretenden axialen Temperaturgradienten radial außen der Radbremsscheibe zwischen dem Radsteg und den Anlagebereichen erhebliche Überhöhungen der Flächenpressung. (Wäre die jeweilige Bremsscheibe nicht mit dem Radkörper verschraubt, so würde sie die Form einer Tellerfeder annehmen)

Daneben haben die ringförmigen Radbremsscheiben die Neigung, sich durch Zugeigenspannungen in den Reibflächen, die durch hohe thermische Belastungen auftreten, entgegengesetzt tellerartig zu verformen.

Dann entstehen im kalten Zustand Überhöhungen der Flächenpressungen in den radial innen liegenden Anlagebereichen.

Durch ein thermisch bedingtes "Atmen" der Radbremsscheibe, also einem radialen intervallartigen Zusammenziehen und Ausdehnen, tritt bei jedem Bremsvorgang ein sogenanntes Reibgleiten in den Anlagebereichen auf.

Aufgrund der genannten Überhöhungen der Flächenpressungen kommt es vor allem bei hohen Bremsleistungen zu einem Fressen zwischen den Radbremsscheiben und dem Radkörper im Bereich der Anlagebereiche bzw. zu lokalen plastischen Verformungen im Radsteg, was langfristig zu Schädigungen im Rad, wie Rissbildungen, führen kann.

In der EP 0 360 435 A1 ist ein gattungsgemäßes Schienenrad geoffenbart, bei dem zwischen dem Radkörper und den Radbremsscheiben jeweils segmentartige Trägerplatten angeordnet sind, über die Bremskräfte von den Radbremsscheiben auf den Radkörper übertragen werden, wobei diese Trägerplatten derart mit den Radbremsscheiben einerseits und dem Radkörper andererseits verbunden sind, dass sie eine wärmebedingte radiale Ausdehnung der Radbremsscheiben ausgleichen.

Ein weiteres gattungsgemäßes Schienenrad ist aus der DE 296 04 157 U1 bekannt. Darin ist ausgerührt, dass zwischen dem Radkörper und den Auflageflächen der Radbremsscheiben wärmeisolierende Elemente angeordnet sind, die jedoch nicht geeignet sind, die eingangs beschriebenen Probleme zu lösen.

Hierzu gibt auch die EP 0 429 211 A1 keine Hinweise, aus der radial ausgerichtete Gleitelemente bekannt sind, die in schwalbenschwanzförmigen Nuten der Radbremsscheiben einliegen und die ebenfalls eine wärmebedingte radiale Ausdehnung der Radbremsscheiben ermöglichen.

Der Erfindung liegt die Aufgabe zugrunde, ein Schienenrad der gattungsgemäßen Art so weiterzuentwickeln, dass mit konstruktiv einfachsten Mitteln eine betriebsbedingte Überbeanspruchung verhindert und dadurch die Standzeit insgesamt erhöht wird.

Diese Aufgabe wird durch ein Schienenrad mit den Merkmalen des Anspruchs 1 gelöst.

Durch die Anordnung einer mechanisch und thermisch hochbelastbaren Zwischenlage zumindest im jeweiligen Anlagebereich zwischen den Radbremsscheiben und dem Radkörper werden Fresserscheinungen und somit Radschäden vermieden.

Die thermisch bedingten, zum Stand der Technik als "Atmen" bezeichneten radialen Verformungen der Radbremsscheibe, die beim Bremsen auftreten, bleiben nun ohne Wirkung, da die Zwischenlage sozusagen als Gleitschicht fungiert, auf der entweder die Radbremsscheibe entsprechend gleitet, wenn die Zwischenlage radial gesichert am Radkörper gehalten ist, oder die Zwischenlage sich mitsamt der angeschlossenen Radbremsscheibe relativ zum Radkörper darauf gleitend bewegt.

Zweckmäßigerweise ist dabei die Zwischenlage in ihrer flächigen Abmessung gleichgroß oder größer als die zugeordnete Abmessung des Anlagebereiches der Radbremsscheiben, so dass eine geringe Flächenpressung wirksam ist.

Die genannten Fresserscheinungen bzw. plastischen Verformungen im Radsteg werden somit verhindert, so dass auch die in deren Folge entstehende Rissbildung wirksam vermieden wird.

Naturgemäß führt dies zu einer deutlichen Erhöhung der Standzeit des gesamten Schienenrades sowie einer bemerkenswerten Verbesserung der Betriebssicherheit.

Hierzu ist es auch zweckdienlich, die Zwischenlage aus einem Blech herzustellen, dessen Härte deutlich höher ist, als die Härte bzw. Festigkeit des Radsteges.

Wie sich gezeigt hat, ist ein Blech aus rostfreiem Stahl mit polierten Oberflächen, das üblicherweise als Rollenmaterial vorliegt, für diesen Einsatzzweck in idealer Weise geeignet, wobei die Zugfestigkeit eines solchen Bleches > 1000 N/mm² sein sollte und die Dicke etwa 1 mm. Prinzipiell sind aber auch andere Blechdicken einsetzbar.

Nach einer bevorzugten Weiterbildung der Erfindung bestehen die Zwischenlagen jeweils aus Kreisring-Abschnitten, die in Umfangsrichtung aneinander gereiht anliegen.

Dabei sind Kreisring-Abschnitte von 30°, 60°, 120° oder 180° denkbar. Grundsätzlich kann selbstverständlich die Zwischenlage als einteiliger Blechring ausgebildet sein. Die Befestigung der Kreisring-Abschnitte in radialer Richtung erfolgt form-oder reibschlüssig. Der Formschluss kann entweder am Radsteg oder an der Anlageseite der Radbremsscheibe erfolgen.

Ein Reibschluss hingegen wird durch eine entsprechende Verspannung mittels der Verschraubung erreicht, durch die die Radbremsscheiben am Radsteg bzw. am Radkörper befestigt sind.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Teilausschnitt eines erfindungsgemäßen Schienenrades in einer geschnittenen Seitenansicht
- Figuren 2 und 3: jeweils ein weiteres Ausführungsbeispiel der Erfindung in einem vergrößerten Teilausschnitt, entsprechend der Figur 1
- Figur 4: einen Teil des Schienenrades in einer Draufsicht
- Figur 5: ein weiteres Ausführungsbeispiel der Erfindung in einem vergrößerten Teilausschnitt in einer geschnittenen Seitenansicht.

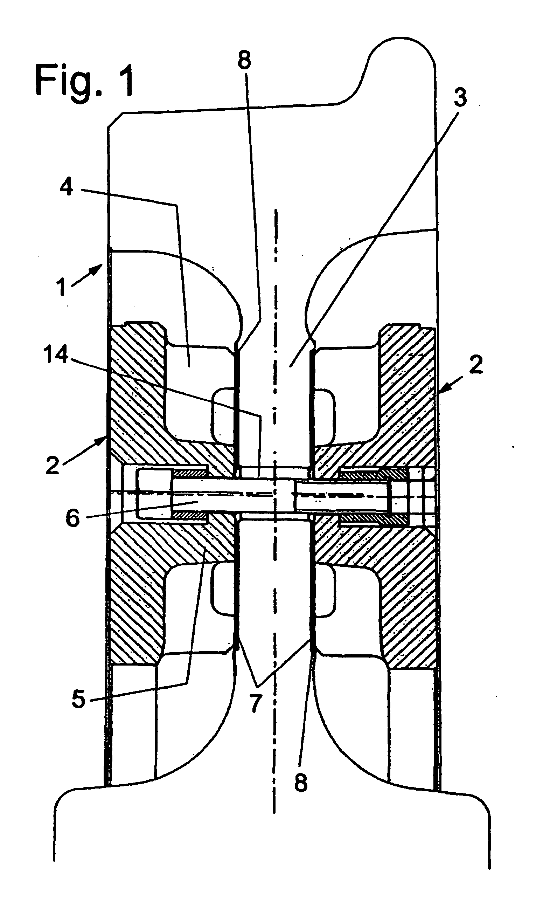

In der Figur 1 ist ein Teilbereich eines Schienenrades dargestellt und zwar einer der Bereiche, in denen beidseitig an einen Radkörper 1 Radbremsscheiben 2 angeschlossen sind.

Dabei weist ein Radsteg 3 des Radkörpers 1, der zwei umfängliche, radial sich erstreckende Anlageflächen bildet, eine Bohrung 14 auf, durch die eine Schraube 6 geführt ist, mit der die Radbremsscheiben 2 fest mit dem Radkörper 1 verbunden sind.

Jede Schraube 6, von denen im Übrigen mehrere, in gleichem Winkelabstand auf einem Umfangskreis verteilt sind, ist durch ein Befestigungs-Auge 5 der jeweiligen Radbremsscheibe 2 geführt, das stirnseitig ebenso einen Anlagebereich gegenüber dem Radsteg 3 bildet, wie Kühlrippen 4 der Radbremsscheibe.

Zwischen den Anlagebereichen des Befestigungs-Auges 5 und den Kühlrippen 4 und dem Radsteg 3 ist jeder Radbremsscheibe 2 zugeordnet eine Zwischenlage 7 angeordnet, an der somit einerseits der Radsteg 3 und andererseits die Anlagebereiche der Radbremsscheibe 2 anliegen.

Diese Zwischenlagen 7 bestehen aus einem mechanisch und thermisch hochbelastbaren Material, bevorzugt aus einem hartgewalzten Blech, dessen Härte bzw. Festigkeit größer ist als die des Radsteges 3.

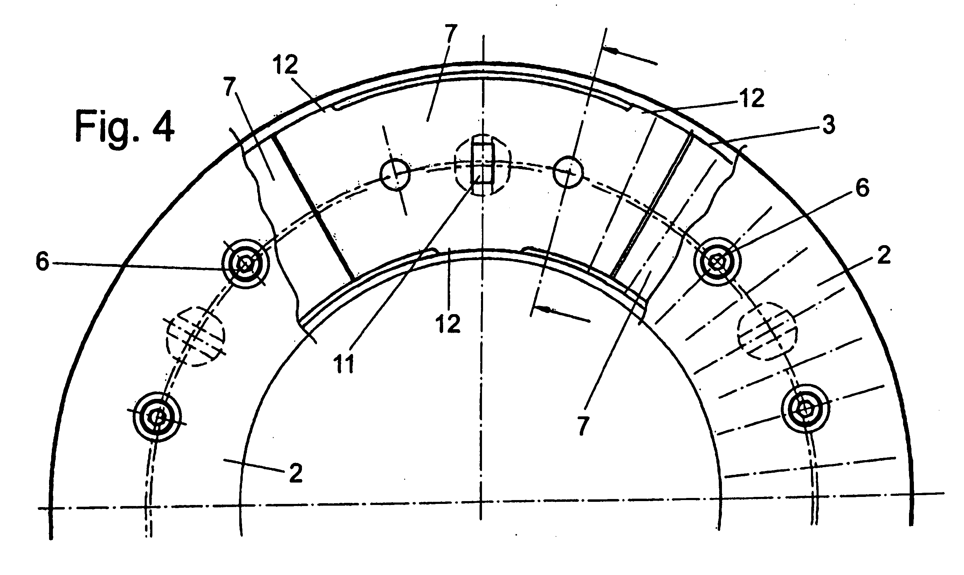

Wie besonders deutlich in der Figur 4 zu erkennen ist, bestehen die Zwischenlagen 7 aus Kreisring-Abschnitten, die gleichmäßig über den Umfang verteilt sind, wobei die Anzahl der Kreisring-Abschnitte variieren kann. Beispielsweise sind bei einer Anzahl von zwölf Schrauben 6 gleichviele Kreisring-Abschnitte vorgesehen, die demnach jeweils einen Winkel von 30° einschließen.

Zur radialen Sicherung sind die Zwischenlagen 7 vorzugsweise formschlüssig gehalten, wozu bei dem in der Figur 1 gezeigten Beispiel der Radsteg 3 Abstufungen 8 aufweist, in denen die Zwischenlagen 7 in radialer Richtung weitgehend verschiebegesichert einliegen.

Zur Durchführung der Schrauben 6 weisen die Zwischenlagen 7 entsprechende Öffnungen auf.

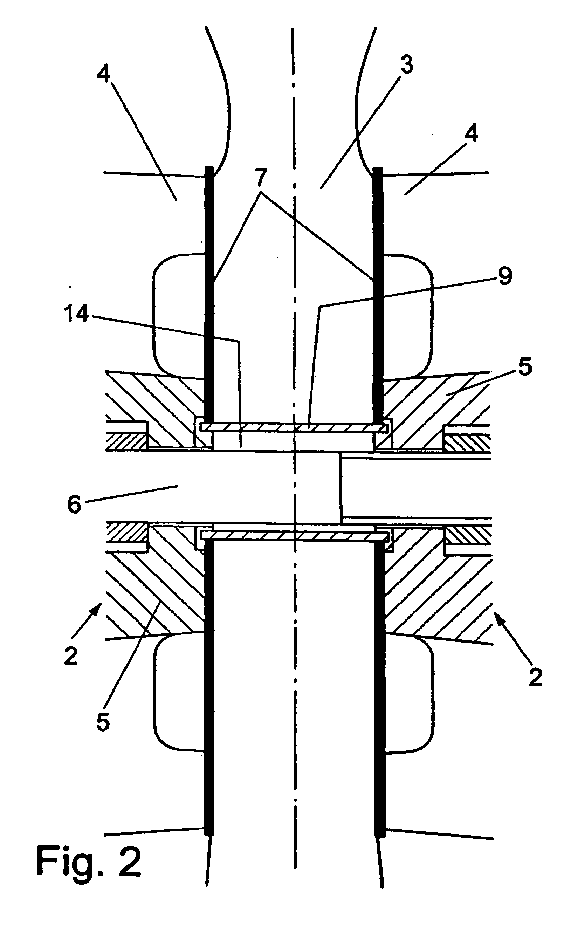

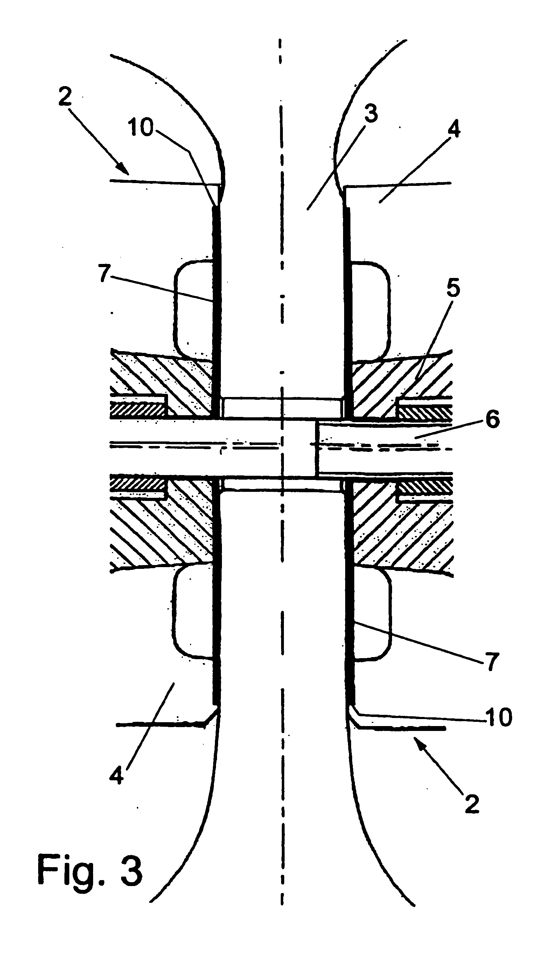

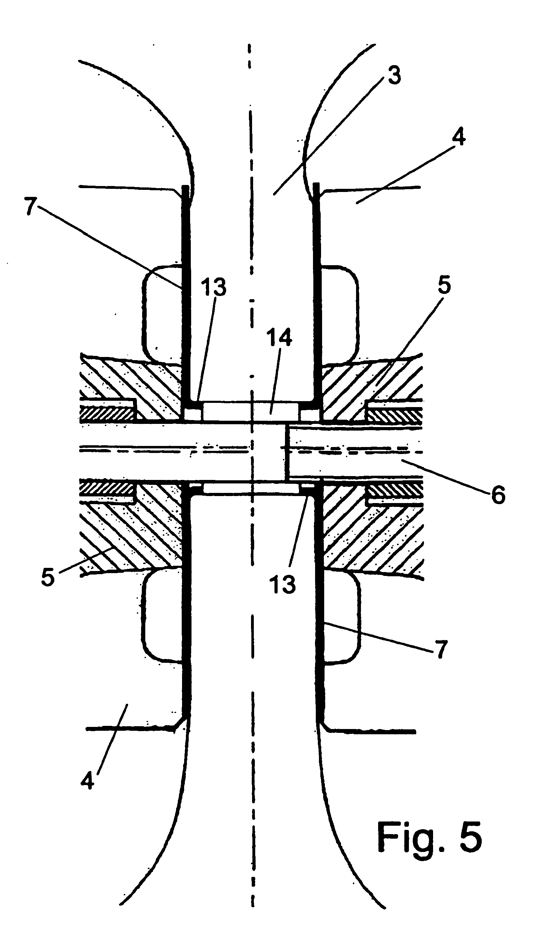

Bei dem in der Figur 2 gezeigten Beispiel, in der ebenso wie in den Figuren 3 und 5 eine vergrößerte Darstellung im Anlagebereich der Zwischenlagen 7 wiedergegeben ist, erfolgt die radiale Sicherung in beide Richtungen, also nach außen und nach innen durch eine Hülse 9, die in die Bohrung 14 eingesteckt und dort axial gesichert gehalten ist, wobei die Hülse 9 den Radsteg 3 beidseitig zumindest um die Dicke der Zwischenlagen 7 überragt.

Der Außendurchmesser der Hülse 9 entspricht etwa dem lichten Durchmesser einer mittigen Ausnehmung der Zwischenlage 7, so dass diese einerseits problemlos aufgesteckt und andererseits gegen ein seitliches Verschieben gesichert gehalten ist.

Bei den Ausführungsvarianten nach den Figuren 1 und 2 sind somit die Zwischenlagen 7 am Radsteg 3 arretiert. Durch die erkennbare großflächige Anlage der Zwischenlagen 7 am Radsteg 3, deren Außenradius bestimmt wird von der radialen Breite der Kühlrippen 4, die praktisch äußere Anlagebereiche bilden, wird die Entstehung nennenswerter Temperaturunterschiede zwischen Blech und Radsteg vermieden und somit auch thermisch bedingte Verspannungen der Zwischenbleche gegenüber dem Rad. Ein Gleiten der Bleche auf dem Radsteg findet nicht statt.

Die an der jeweiligen Zwischenlage sich abstützende Radbremsscheibe 2 hingegen gleitet bei einer thermisch bedingten Formänderung in radialer Richtung auf der Zwischenlage 7, so dass ein Einfressen bzw. eine Beschädigung des Radsteges ausgeschlossen ist.

Im vorgenannten Sinn sind die Zwischenlagen 7 auch bei dem in der Figur 5 gezeigten Beispiel am Radsteg 3 arretiert.

Hierzu weisen die Zwischenlagen 7 im Bereich der Bohrungen 14 des Radsteges 3 Bördelungen 13 auf, die sich als Kragen darstellen und in die Bohrung 14 hineinragen, wobei sie in ihrem Außendurchmesser etwa dem lichten Durchmesser der Bohrung 14 entsprechen, so dass eine radiale Sicherung in beiden Richtungen gewährleistet ist.

In der Figur 3 ist ein weiteres Beispiel einer Fixierung der Zwischenlagen 7 dargestellt.

Hier weist die Radbremsscheibe 2 in ihren dem Radsteg 3 zugewandten Anlagebereichen Abstufungen 10 auf, in denen jeweils eine der Zwischenlagen 7 einliegen und radial gesichert sind.

Bei einem temperaturbedingten Ausdehnen und Zusammenziehen der Radbremsscheiben 2 in radialer Richtung bewegt sich die jeweilige Zwischenlage 7 in gleichem Maße mit, so dass die Zwischenlagen 7 praktisch auf dem Radsteg 3 gleiten.

Wie in der Figur 4 zu erkennen ist, besteht eine weitere Art der radialen Fixierung der Zwischenlagen 7 darin, dass in diese im Überdeckungsbereich mit Gleitsteinen 11, die zwischen dem Radsteg 3 und den Radbremsscheiben 2 angeordnet sind, Ausstanzungen eingebracht sind, die in ihren Grundrissabmaßen den Gleitsteinen 11 entsprechen, wobei die Gleitsteine 11 die zugeordneten Ausstanzungen durchtreten, so dass eine formschlüssige Lagefixierung am Radsteg 3 erreicht ist.

Da zwischen der Radbremsscheibe 2 und der Zwischenlage 7 Temperaturunterschiede bei jedem Bremsvorgang auftreten, ist die Zwischenlage 7 so gestaltet, dass Krümmungsunterschiede zu keinen Verspannungen führen.

Diese Ausgestaltung der Zwischenlage 7 erfolgt in der Form, dass die Zwischenlage 7 am Außen- und Innenrand mit Anlageabschnitten 12 versehen ist, die an den zugeordneten Stufenkanten der Abstufungen 8, 10 anliegen (Figur 4).

Grundsätzlich ist eine einteilige Zwischenlage in Form eines Ringes funktionsfähig. Aufgrund der großen Durchmesser der Radbremsscheiben 2 für Schienenräder ist es jedoch wesentlich kostengünstiger, Kreisring-Abschnitte einzusetzen, wobei diese gestanzt, laser- oder wasserstrahlgeschnitten werden.

Bei dem in der Figur 4 gezeigten Beispiel sind 60°-Kreisring-Abschnitte gewählt und jede Zwischenlage 7 am Außenrand mit zwei Anlageabschnitten 12 und am Innenrand mit einem Anlageabschnitt 12 versehen, der mittig liegt, während die beiden äußeren Anlageabschnitte, bezogen auf die Länge, in den äußeren Randbereichen angeordnet sind, so dass sich eine Drei-Punkt-Anlage ergibt, durch die, wie erwähnt, eine Verspannung bei Krürnmungsunterschieden verhindert wird.

### Bezugszeichenliste

- 1: Radkörper
- 2: Radbremsscheibe
- 3: Radsteg
- 4: Kühlrippe
- 5: Befestigungs-Auge
- 6: Schraube
- 7: Zwischenlage
- 8: Abstufung
- 9: Hülse
- 10: Abstufung
- 11: Gleitstein
- 12: Anlageabschnitt
- 13: Bördelung
- 14: Bohrung

## Patentansprüche

1. Schienenrad mit einen Radkörper (1) und beidseitig daran mit Befestigungselementen angeschlossenen Radbremsscheiben (2), **dadurch gekennzeichnet, dass** zumindest in den jeweiligen Anlagebereichen der Radbremsscheiben (2) am Radkörper (1) eine mechanisch und thermisch hoch belastbare Zwischenlage (7) angeordnet ist, die aus einem Blech aus rostfreiem Stahl mit einer polierten Oberfläche besteht, der eine höhere Festigkeit aufweist als der Radkörper (1) bzw. ein Radsteg (3).

2. Schienenrad nach Anprüch 1, **dadurch gekennzeichnet, dass** das Blech eine Zugfestigkeit von ≥ 1000 N/mm² aufweist.

3. Schienenrad nach Ansprüch 1 oder 2, **dadurch gekennzeichnet, dass** jede Zwischenlage (7) als Kreisring ausgebildet ist.

4. Schienenrad nach einem der vorhergehenden Ansprüche, **dadurch gekennzeichnet, dass** die Zwischenlagen (7) aus Kreisring-Abschnitten gebildet sind.

5. Schienenrad nach einem der vorhergehenden Ansprüche, **dadurch gekennzeichnet, dass** die Kreisring-Abschnitte gleich groß sind.

6. Schienenrad nach einem der vorhergehenden Ansprüche, **dadurch gekennzeichnet, dass** die Kreisring-Abschnitte gleiche Winkel einschließen.

7. Schienenrad nach einem der vorhergehenden Ansprüche, **dadurch gekennzeichnet, dass** die Kreisbogen-Abschnitte jeweils einen Winkel von 30°, 60°, 120° oder 180° einschließen.

8. Schienenrad nach einem der vorhergehenden Ansprüche, **dadurch gekennzeichnet, dass** die radiale Breite der Zwischenlagen (7) zumindest der maximalen radialen Breite der Anlagebereiche der Radbremsscheiben entsprechen.

9. Schienenrad nach einem der vorhergehenden Ansprüche, **dadurch gekennzeichnet, dass** die Zwischenlagen (7) in radialer Richtung am Radkörper (1) gesichert gehalten sind.

10. Schienenrad nach einem der vorhergehenden Ansprüche, **dadurch gekennzeichnet, dass** die Zwischenlagen (7) radial gesichert an der jeweiligen Radbremsscheibe (2) gehalten sind.

11. Schienenrad nach einem der vorhergehenden Ansprüche, **dadurch gekennzeichnet, dass** die Zwischenlagen (7) in Abstufungen (8) des Radbremskörpers (1) bzw. des Radsteges (3) einliegen.

12. Schienenrad nach einem der vorhergehenden Ansprüche, **dadurch gekennzeichnet, dass** im Radsteg (3) in Bohrungen (14) zur Durchführung von Schrauben (6) zur Befestigung der Radbremsscheiben (2) Hülsen (9) gehalten sind, die beidseitig über den Radsteg (3) vorstehen und Öffnungen der Zwischenlagen (7) durchtreten, wobei der Außendurchmesser der Hülsen (9) etwa dem lichten Durchmesser der Öffnungen der Zwischenlagen (7) entsprechen.

13. Schienenrad nach einem der vorhergehenden Ansprüche, **dadurch gekennzeichnet, dass** die Zwischenlagen (7) im Überdeckungsbereich mit den Bohrungen (14) kragenförmige Bördelungen (13) aufweisen, die in die Bohrungen (14) hineinragen, wobei der Außendurchmesser der Bördelungen (13) etwa dem lichten Durchmesser der Bohrungen (14) entspricht.

14. Schienenrad nach einem der vorhergehenden Ansprüche, **dadurch gekennzeichnet, dass** die Zwischenlagen (7) zur radialen Sicherung in Abstufungen (10) der Anlagebereiche der Radbremsscheiben (2) einliegen.

15. Schienenrad nach einem der vorhergehenden Ansprüche, **dadurch gekennzeichnet, dass** bei Ausbildung der Zwischenlagen (7) als Kreisring-Abschnitte jeder Kreisring-Abschnitt am Außenumfang, den jeweiligen Endbereich bildend, einen Anlageabschnitt (12) und am Innenumfang einen mittig angeordneten Anlageabschnitt (12) aufweist, wobei die Anlageabschnitte (12) an den Begrenzungen der Abstufungen (8, 10) anliegen.

16. Schienenrad nach einem der vorhergehenden Ansprüche, bei dem zwischen den Radbremsscheiben (2) und dem Radsteg (3) Gleitsteine (11) angeordnet sind, **dadurch gekennzeichnet, dass** die Zwischenlagen (7) im Überdeckungsbereich mit den Gleitsteinen (11) Ausstanzungen aufweisen, in die die Gleitsteine (11) eingreifen, wobei die Grundrissabmaße der Gleitsteine (11) etwa den Grundrissabmaßen der zugeordneten Ausstanzungen entsprechen.

## Claims

1. A rail wheel with a wheel body (1) and wheel brake disks (2) connected thereto on both sides with fastening elements, **characterised in that** a mechanically and thermally highly loadable intermediate layer (7) is arranged on the wheel body (1) at least in the respective contact regions of the wheel brake disks (2), said intermediate layer (7) being formed from a metal sheet of stainless steel and having a polished surface which has a greater strength than the wheel body (1) or a wheel web (3).

2. The rail wheel as claimed in claim 1, **characterised in that** the metal sheet has a tensile strength of ≥ 1000 N/mm².

3. The rail wheel as claimed in claim 1 or 2, **characterised in that** each intermediate layer (7) is designed as a circular ring.

4. The rail wheel as claimed in one of the preceding claims, **characterised in that** the intermediate layers (7) are formed from circular ring portions.

5. The rail wheel as claimed in one of the preceding claims, **characterised in that** the circular ring portions are identical in size.

6. The rail wheel as claimed in one of the preceding claims, **characterised in that** the circular ring portions enclose identical angles.

7. The rail wheel as claimed in one of the preceding claims, **characterised in that** the circular arc portions each enclose an angle of 30°, 60°, 120° or 180°.

8. The rail wheel as claimed in one of the preceding claims, **characterised in that** the radial width of the intermediate layers (7) corresponds at least to the maximum radial width of the contact regions of the wheel brake disks.

9. The rail wheel as claimed in one of the preceding claims, **characterised in that** the intermediate layers (7) are held on the wheel body (1) in a manner secured in the radial direction.

10. The rail wheel as claimed in one of the preceding claims, **characterised in that** the intermediate layers (7) are held on the respective wheel brake disk (2) in a radially secured manner.

11. The rail wheel as claimed in one of the preceding claims, **characterised in that** the intermediate layers (7) are located in steps (8) of the wheel brake body (1) or of the wheel web (3).

12. The rail wheel as claimed in one of the preceding claims, **characterised in that** sleeves (9) are held in the wheel web (3) in bores (14) for the passage of bolts (6) for securing the wheel brake disks (2), said sleeves protruding on both sides beyond the wheel web (3) and passing through openings in the intermediate layers (7), the outside diameter of the sleeves (9) approximately corresponding to the clear diameter of the openings in the intermediate layers (7).

13. The rail wheel as claimed in one of the preceding claims, **characterised in that**, in the region of overlap with the bores (14), the intermediate layers (7) have collar-shaped flanges (13) which project into the bores (14), the outside diameter of the flanges (13) approximately corresponding to the clear diameter of the bores (14).

14. The rail wheel as claimed in one of the preceding claims, **characterised in that** the intermediate layers (7) are located for radial securing purposes in steps (10) of the contact regions of the wheel brake disks (2).

15. The rail wheel as claimed in one of the preceding claims, **characterised in that** if the intermediate layers (7) are designed as circular ring portions, each circular ring portion has a contact section (12) on the outer circumference, forming the respective end region, and a centrally arranged contact section (12) on the inner circumference, the contact sections (12) bearing against the boundaries of the steps (8, 10).

16. The rail wheel as claimed in one of the preceding claims, in which sliding blocks (11) are arranged between the wheel brake disks (2) and the wheel web (3), **characterised in that**, in the region of overlap with the sliding blocks (11), the intermediate layers (7) have punched-out portions in which the sliding blocks (11) engage, the basic contour dimensions of the sliding blocks (11) approximately corresponding to the basic contour dimensions of the associated punched-out portions.

## Revendications

1. Roue pour rail, comprenant un corps (1) de roue et des disques (2) de freins de roue, qui y sont raccordés des deux côtés par des éléments de fixation, **caractérisée en ce que**, au moins dans les zones d'application respectives des disques (2) de freins de roue au corps (1) de roue, est disposée une couche (7) intermédiaire pouvant bien résister mécaniquement et thermiquement, qui est en une tôle en acier inoxydable ayant une surface polie, tôle qui a une résistance plus grande que le corps (1) de roue ou une âme (3) de roue.

2. Roue pour rail suivant la revendication 1, **caractérisée en ce que** la tôle a une résistance à la traction ≥100ON/mm².

3. Roue pour rail suivant la revendication 1 ou 2, **caractérisée en ce que** chaque couche (7) intermédiaire est constituée sous la forme d'un anneau circulaire.

4. Roue pour rail suivant l'une des revendications précédentes, **caractérisée en ce que** les couches (7) intermédiaires sont formées de tronçons d'anneaux circulaires.

5. Roue pour rail suivant l'une des revendications précédentes, **caractérisée en ce que** les tronçons d'anneaux circulaires sont de même dimension.

6. Roue pour rail suivant l'une des revendications précédentes, **caractérisée en ce que** les tronçons d'anneaux circulaires ont les mêmes angles.

7. Roue pour rail suivant l'une des revendications précédentes, **caractérisée en ce que** les tronçons d'arcs de cercle ont respectivement un angle de 30°, 60°, 120° ou 180°.

8. Roue pour rail suivant l'une des revendications précédentes, **caractérisée en ce que** la largeur radiale des couches (7) intermédiaires correspond au moins à la largeur radiale maximum des zones d'application des disques de freins de roue.

9. Roue pour rail suivant l'une des revendications précédentes, **caractérisée en ce que** les couches (7) intermédiaires sont retenues dans la direction radiale en étant fixées au corps (1) de roue.

10. Roue pour rail suivant l'une des revendications précédentes, **caractérisée en ce que** les couches (7) intermédiaires sont maintenues en étant fixées radialement aux disques (2) de freins de roue respectifs.

11. Roue pour rail suivant l'une des revendications précédentes, **caractérisée en ce que** les couches. (7) intermédiaires viennent dans des épaulements (8) du corps (1) de freins de roue ou de l'âme (3) de roue.

12. Roue pour rail suivant l'une des revendications précédentes, **caractérisée en ce que**, dans l'âme (3) de roue, sont retenus, dans des trous (14) pour le passage de vis (6) de fixation des disques (2) de freins de roue, des manchons (9), qui dépassent des deux côtés de l'âme (3) de roue et passent dans des ouvertures des couches (7) intermédiaires, le diamètre extérieur des manchons (9) correspondant à peu près au diamètre intérieur des ouvertures des couches (7) intermédiaires.

13. Roue pour rail suivant l'une des revendications précédentes, **caractérisée en ce que** les couches (7) intermédiaires ont, dans la zone de recouvrement avec les trous (8), des collets (13) qui pénètrent dans les trous (14), le diamètre extérieur des collets (13) correspondant à peu près au diamètre intérieur des trous (14).

14. Roue pour rail suivant l'une des revendications précédentes, **caractérisée en ce que** les couches (7) intermédiaires pénètrent pour la fixation radiale dans des épaulements (10) des zones d'application des disques (2) de freins de roues.

15. Roue pour rail suivant l'une des revendications précédentes, **caractérisée en ce que**, lors de la constitution des couches (7) intermédiaires sous forme de tronçons d'anneaux circulaires, chaque tronçon d'anneau circulaire a, sur le pourtour intérieur formant la zone d'extrémité respective, un tronçon (12) d'application et, sur le pourtour intérieur, un tronçon (12) d'application disposé au milieu, les tronçons (12) d'application s'appliquant aux limites des épaulements (8, 10).

16. Roue pour rail suivant l'une des revendications précédentes, dans laquelle, entre les disques (2) de freins de roue et l'âme (3) de roue, sont disposés des patins (11), **caractérisée en ce que** les couches (7) intermédiaires ont, dans la zone de recouvrement avec les patins (11), des matriçages, dans lesquels les patins (11) pénètrent, les dimensions en projection sur un plan horizontal des patins (11) correspondant à peu près aux dimensions sur un plan horizontal des matriçages associés.
